# EUROPEAN PATENT APPLICATION

(11) **EP 2 911 433 A1**
(43) Date of publication of application: **26.08.2015**
(21) Application number: 14380007.6
(22) Date of filing: 22.02.2014
(51) Int. Cl.: H04W 12/06, H04W 12/04, H04L 29/06, H04W 4/00

(54) **Method and system of authentication through cooperation of devices in proximity**

(71) Applicant: Movilok Interactividad Movil, S.L., 28007 Madrid (ES)
(72) Inventor: Del Ser Toral, Luis, 28007 Madrid (ES)
(74) Representative: De la Fuente Fernandez, Dionisio

(57) **Abstract**

The description is of a method and a system of authentication through cooperation of devices in proximity which allows one-time passwords (OTP) to be generated between any device or handset carried or worn by the user (mobile telephone or other(s) incorporated as part of a user's personal attire) and which are inter-related by some type of physical connectivity which might be available through user proximity whenever the device is activated. The method and system allow secure access to logical resources (for example, on-line systems and services), physical resources (for example, positions, locations and stays), or to validate processes or transactions securely (for example, a transfer of funds).

## Description

### Object of the Invention

This invention refers to a method and a system of authentication through cooperation of devices in proximity, which provides essential new features and notable advantages compared to the means already known and used for the same purposes in the current state of the art.

More particularly, the invention refers to a method and a system through which single-use passwords are generated with the cooperation of any device carried by the user (mobile telephone or other devices carried by the user as part of his/her personal attire) and which are inter-related by some type of physical connectivity which might be available through user proximity whenever the device is activated.

The field of application of the invention is that of communication and authentication networks and systems. More precisely and specifically, the field of application of this invention comprises electronic authentication methods (of users, transactions, etc.) allowing it to be used with mobile devices, computers or systems for the purpose of permitting secure access to logical resources (for example, on-line services and systems), physical resources (for example, positions, locations and stays), or validating processes or transactions securely (for example, a transfer of funds).

### Background and Summary of the Invention

Electronic authentication is defined as the verification of a user, a process or a device which is adopted as a prerequisite for permitting access to resources. This user, process or device is usually given the generic identifying name of "entity".

There are three principal categories in which an "entity" may be authenticated: based on a factor of "knowledge" (something which the entity knows), based on a factor of "possession" (something which the entity has or possesses), or based on a factor which is "inherent" to the entity (something which the entity is). For authentication to take place, one or more of these factors must be presented to a third party, which must validate them.

In both the real physical environment and the electronic one, it continues to be the norm to use a single factor as an authentication mechanism (a static password or a PIN to access a device, system or service; a key, a remote control or a magnetic card or NFC to open a door; a fingerprint; a card of coordinates to validate a transaction). In the electronic and on-line service environment, the trend points to the use of more than one authentication factor to reduce the possibility of the requesting entity presenting a false proof of identity. Although it is not the only element to be taken into account, in general an authentication mechanism is considered to be more reliable ("strong authentication") if it considers more than one factor; this is known as multi-factor authentication.

The majority of authentication solutions incorporate additionally some cryptography technique, such as PKI, OTP (One Time Password) or challenges to prevent the secret being revealed directly, and thus ensure that the identity information is verified without compromising security.

There are commercial factor 2 authentication solutions (multi-factor with 2 factors) available which are designed to improve security in access to information and network systems, replacing a static password with dynamic codes generated from information known by the user together with an additional device; this may be either a specific piece of apparatus (such as RSA's SecurID devices or Vasco's DIGIPASS tokens, to mention some of the most popular on the market), or a smartphone running an application designed to generate factor 2 codes, such as the Google Authenticator application, for example.

Many of these solutions use the standards arising from the Initiative for Open Authentication (OATH: http://www.openauthentication.org/specifications) as algorithms to generate the authentication code. The OATH algorithms are based on generating codes from a secret (called K) shared between the code generator and the validator, and a variable value (called C) which is also known by both ends of the communication. This secret, together with the variable value, has combined byte truncation mechanisms and HMAC (Keyed-Hashing for Message Authentication) applied to it, defined in standard RFC 2104 IETF - Internet Engineering Task Force and subsequently updated in the standard RFC 6151, which act as a single direction function on the values (K, C). In this way, both the code generator and the validator are able to generate the same OTP code from K and C at any given time, allowing the validator to authenticate the generator, but in such a way that anyone intercepting the OTP code would not be able to obtain the values K and C from those generated and would not be able to generate valid new codes.

The OATH algorithms can have three variants:
- HOTP: HMAC-Based One-Time Password Algorithm. Defined in the IETF (Internet Engineering Task Force) standard RFC 4226. It generates authentication codes in which the variable value C is a counter, which increases every time it is used. It provides passwords which can only be used once;
- TOTP: Time-Based One-Time Password Algorithm. Defined in IETF standard RFC 6238. It generates authentication codes in which the variable value C is a time stamp. It provides temporary passwords, which are only valid for a certain space of time, and expire after this time, and
- OCRA: OATH Challenge-Response Algorithm. Defined in IETF standard RFC 6287. It generates authentication codes in which the variable value C is a set of data which can combine time stamps, counters, challenges or passwords. It provides passwords which can combine the properties of the HOTP and TOTP algorithms, and include additional code generator information.

Other proposed solutions, specifically for generating Factor 2 codes using smartphones, propose their own algorithms based on single direction functions, such as for example those contained in the publications:
- "OTP-Based Two-Factor Authentication Using Mobile Phones", Eldefrawy et al., International Conference on Information Technology: New Generations (ITNG), 2011 Eighth. E-ISBN: 978-0-7695-4367-3, pages 327-331, and
- "Two Factor Authentication Using Mobile Phones", Aloul et al, International Conference on Computer Systems and Applications, 2009. AICCSA 2009. IEEE/ACS. E-ISBN: 978-1-4244-3806-8. Pages 641-644.

The broad dissemination of on-line services via the internet or mobile telephones has also extended simultaneous communication by more than one communication channel or network (multi-channel communication) to improve the security of the service. In this way:
- a principal channel is set up between the user and the service to exchange information about the service, and
- another simultaneous, additional and different channel from the previous one is also established, also between the user and service, but to exchange authentication information.

For this additional out-of-band (OOB) authentication channel, it is usual to use cell phone mobile networks. On-line banking is an example where the user's interaction with the service is from a computer or mobile telephone, using HTTPS communication; when the service requires additional authentication, it sends an SMS with an OTP code to the user's mobile device.

According to Gartner's study in the field of authentication called "Magic Quadrant for User Authentication" [Gartner Group- 9-Dec-2013], the majority of solutions in the authentication field consider the mobile telephone as a central element, either:
- by using the telephone as a key generation device (softoken, software version of the token hardware devices), or
- by using out-of-band (OOB) communications to send the password to the mobile device via push messaging or SMS.

The above solutions depend on the user of the solution feeling involved in the authentication process and cooperating to guarantee that the system functions correctly. However, the authentication scenario has changed, given that there are no guarantees that mobile devices are completely trustworthy, either because of involuntary reasons (occurrence of Trojans and malware) or semi-voluntary reasons ("rooting" of handsets).

If the devices are compromised, the information stored to generate passwords may not be secure and messages with OTP passwords may be intercepted and diverted to a third party, which uses them fraudulently.

As a result, the need arises for authentication methods supported on mobile devices which provide "strong authentication" but which take into account that the mobile devices and communications may be compromised and insecure.

For the purposes of providing solutions to solve the problems with the previous technique, this invention proposes a method and a system for generating one-time passwords (OTP) depending on cooperation between the various devices carried by the user (mobile telephones and other wearable devices), which are inter-related by some type of physical connectivity which may be available in the proximity of the user whenever the device is activated. One illustrative example is a user's mobile telephone and the Bluetooth-linked smartwatch on his/her wrist.

On the basis of the previous configuration of the system, the devices are organised as information processing nodes in an ordered sequence of steps which is characterised in that:
- There are at least two nodes and therefore two steps in the sequence;
- Each node receives input data, processes the information according to some kind of algorithm and generates output data;
- The connectivity in the devices is used to establish a communication, via a transmission protocol, of the output data from one node to the input of another/others in the sequence of steps;
- The input data of one step may have different origins:
   o Internal origin, such as data from a previous processing status or initialisation data stored previously in the node performing the step;
   o It may come from the context of the device or the network of devices: position, time, measurable accelerometer gestures, network addresses or MAC of devices in that same network;
   o External origin such as, for example, those coming from the user (a secret PIN) or their context (the last digits of the transfer to be carried out), an external piece of data (for example, an SMS message or PUSH message reaching that device), or
   o They may be data from the output of a previous step (other node/s);
- As a result of the correct execution of all the steps in the sequence and in the pre-established order, the aggregated result is a one-time password (OTP) which represents a reliable guarantee of valid identity with an external server;
- The node performing the last step in the sequence does not communicate with previous nodes, it merely presents information to the user (typically, a display or audio).

In this "ad-hoc" network of sequence of steps, all the nodes are in equal conditions and there is no central coordination node. The functions carried out by each of the nodes and the data they handle will be adapted specifically to the particular features of the device (type of device, platform, manufacturer, connectivity, memory, battery), but they all make a contribution and are necessary to carry out the full sequence successfully.

In a combined method and system like the one described briefly above, there is a much higher level of reliability in authentication than in current systems, even though it may be considered that the devices and the communication channels are compromised. This is because:
- Even if one of the steps in the sequence is intercepted, either in a node or a channel between nodes, the information obtained is partial and does not allow authentic authentication to be generated; it would be necessary for an attacker to compromise all the elements of the sequence simultaneously and in the correct order to be able to recompose all the steps necessary to generate the authentication;
- The end node of the sequence presents the OTP to the user carrying it. This information is not displayed to environments other than the user, and
- If the starting conditions between any of the nodes is interrupted (the devices are separated and consequently lose their link, one of them is lost, etc.) the authentication generation system stops working.

Furthermore, the system can be easily integrated with current solutions for sending OTPs via an out-of-band (OOB) channel as an additional step to improve its reliability. Consequently, the password sent to the device (typically Push or SMS) can be considered input data in the system proposed by the invention. The real OTP for authentication will be obtained at the output of the system. In the authentication server which validates the password it will also be necessary to implement the corresponding algorithms and the same initialisation used in a specific implementation of this solution.

### Brief Description of the Drawings

To facilitate understanding of the invention, a set of pages of drawings is provided, which shows schematic representations of elements involved in the system and aspects of interconnectivity between them. In the drawings:
Figure 1 represents a general view of a mobile and other possible wearable devices involved in the authentication generation system proposed by the invention;
Figure 2 illustrates the logic diagram of an "ad-hoc" network created expressly to support the system and which is possible when the devices carried/worn by the user are active;
Figure 3 illustrates the detail for establishment of an ordered sequence between two nodes in a network, with an indication of the order and the direction of progress of the process;
Figure 4 is a detail of the elements which make up the inside of a node, with indication of the functions and the relationship between each of them, together with the inputs and outputs of data in a node, and
Figure 5 is a schematic representation illustrating a graphic example of implementation of the authentication method proposed by this invention.

### Description of the Preferred Embodiment

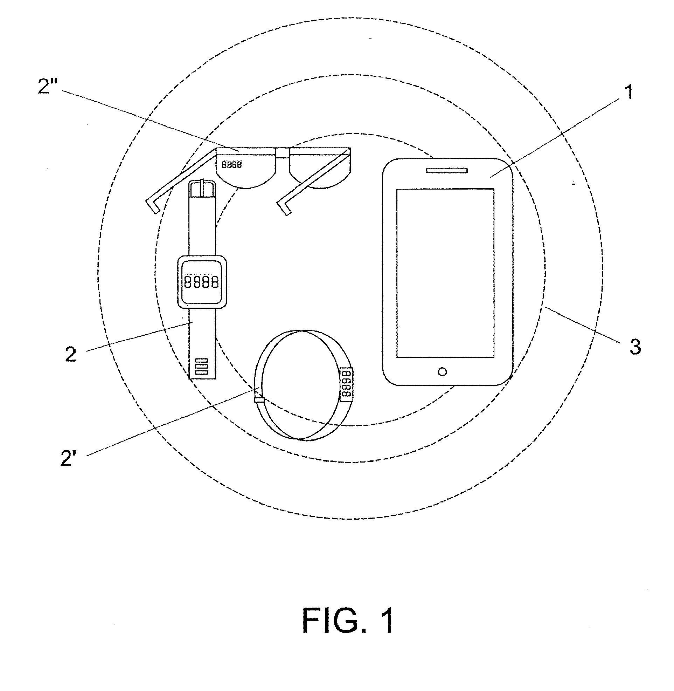

As stated previously, the detailed description of the preferred embodiment of the object of the invention will be given below with the help of the attached drawings, in which the same numerical references are used to designate identical or similar parts. Thus, turning first to Figure 1 of the drawings, which shows a graphic representation of a set of devices which can be carried by a user, such as a mobile telephone 1, and other devices considered wearable which the user has connected at one time or another, such as smartwatch 2, a programmable bracelet 2', programmable glasses 2"; all this set of devices is within the same area of connectivity, which has been indicated with the reference 3 inside a circular area of dashed lines, but which shall be understood as being able to adopt different configurations and multiple size characteristics.

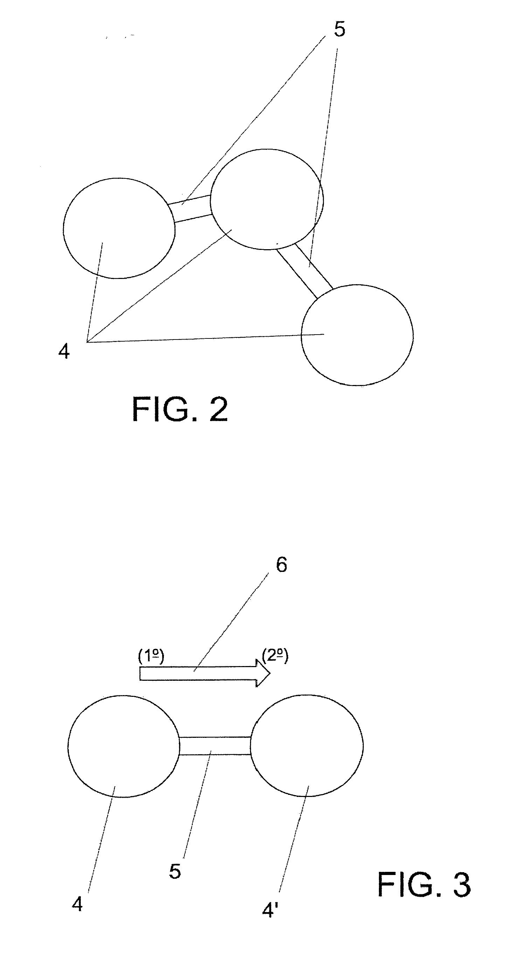

Taking as a starting point the devices connected in proximity and, using specific software for these devices, the configuration of the system shown in Figure 2 establishes information processing nodes 4 which are interconnected 5 by some communication protocol which serves as a link, forming a topology. The graph thus formed by nodes and links represents a specific "ad-hoc" network for the purpose of generating authentication, which exists for the time in which the devices supporting it are switched on and linked because they are carried by a certain user.

Figure 3 shows an ordered sequence of steps 6 performed by the different nodes 4, 4' using the links 5 and which typically begins in an initial node 4 and ends in another end node 4'. In this sequential process, information is transferred from a certain node to the following one in the sequence.

The specific operation of each of the nodes in the sequence comprises: whence it obtains the data, what type of processing it carries out with those data to generate new derivative data (for example cryptographic processing), and finally what it does with the information generated (for example, displaying it to the user, saving it or sending it to the following node).
- It must be understood that although Figure 3 only represents two nodes 4 4', the scheme is repeated for all the nodes involved in a particular implementation of the solution.

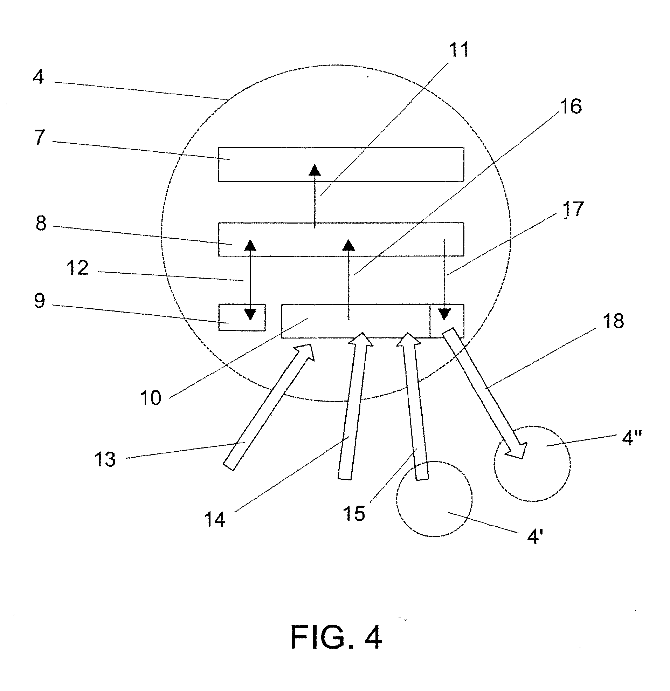

Figure 4 of the drawings shows the internal structure of each node 4, organised into modules which have specific functions as indicated below:
- A storage module (9) is responsible for saving and recovering information on configuration, initialisation or status of the node, using a communications interface 12 to do so;
- A communications module 10, which is responsible for exchanging input and output data between the node 4 and the outside, in which:

The input information may be:
a) Data 13 from the current context of the node 4, and which are typically obtained from the hardware of the device housing the node via an API, or from the reading of one of its sensors such as, for example, the position or a reading of the accelerometer;
b) Data 14 from outside the device housing the node 4 and which reach it through outside interaction, such as a secret PIN keyed into the device by the user, a notification arriving in the form of a Push message or an SMS. Depending on the specific technology of the device, it is possible that external events may be captured, but in other cases user intervention will be necessary: for example, an SMS or a Push notification may be captured automatically from an Android application, but currently this is not possible from an iOS application;
c) Data 15 from a previous step in the sequence, which originated in another previous node 4' which forms part of the same process.

The output information 18 is formed of data resulting from the execution of the logic of this node 4, which are intended to provide input for the following node 4" in the sequence of steps in the process.
- A logic control module 8 of the node 4, which is responsible for processing the data from the storage module 9 and for communications 16. The result of the processing are data which may:
   o be sent 12 to the storage module 9, so that they can be kept,
   o be sent to a communications module 17, so that they can be transmitted 18 to the following node 4' in the sequence, and
   o be sent to a presentation module 7 via the interface 11.
- A presentation module 7 displays authentication data in a format which can be used by the user carrying this device, typically in graphic form (a numeric or alphanumeric code, a bar code), as an audio signal which is played through a microphone, or as any other type of signal (for example, an NFC signal displayed to a reader). Typically, it is the end node in the process which displays the one-time password (OTP) generated to the user, although this is not strictly necessary, and different nodes may have a presentation module which displays some intermediate information in the process or part of the final OTP (for example, only some digits of the OTP).

A cooperative authentication process is formed of at least two nodes 4, 4', 4", but it not necessary for all the functional modules to be implemented in all the nodes. The detail of implementation of the processing logic and the type of input and output data may also vary from one node to another.

### Detail of a method of implementation

The scenario for the example of embodiment of the system of this invention is a system which performs operations which have to be confirmed by a user, who has previously been authenticated. Examples of this type of system are internet banking or a telephone banking system: the user must be authenticated initially to access the system and, once inside, can then perform operations. Some of these operations, such as certain financial transactions, must be confirmed by the user with some additional mechanism. One of these mechanisms consists of automatic sending of an SMS from the system to the user's registered mobile phone, which includes an alphanumeric code. This code acts as input data for the system which is the object of the invention.

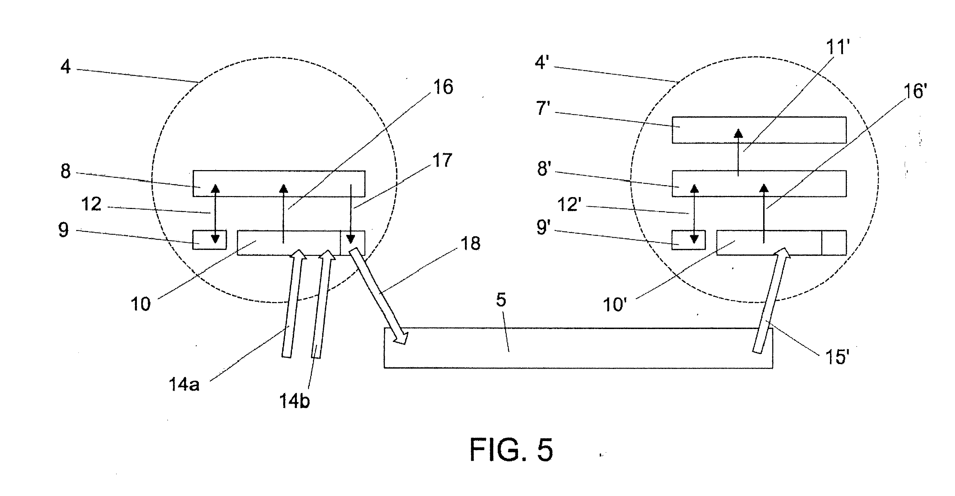

An example of typical implementation, illustrated schematically in Figure 5 of the drawings, is that of a system formed of just two devices: a user's mobile telephone and his/her linked smartwatch (typically by Bluetooth). The sequence defined in the configuration of this authentication system may be set up in such a way that:
- The first step in the sequence is formed of the telephone 4 or initial node in Figure 5;
- The last step in the sequence is formed of the watch 4' or end node in Figure 5;
- The telephone 4 (initial node) receives an SMS as input data to authenticate a transaction (for example, financial);
- The telephone receives the SMS (input data 14a) and an application intercepts it to take it to the initial Node in Figure 5, which collects it using a communications module 10, and supplies it via a communications interface 16 to a logic control and cryptography module 8 which processes the SMS received;
- The node logic module 8 also asks the user to enter a secret PIN 14b which is received in the same way;
- The logic module 8 uses the configuration data established in a data storage module 9 by means of an interface 12 to validate whether the PIN entered by the user is correct;
- If the PIN is correct, the logic module 8 in the initial node calculates a piece of data deriving from the user's PIN and the SMS received (for example, a HASH function on the digits of both), and the calculated data is sent via an interface 17 to the communications module 10, so that the latter can re-send it, as output data 18, to the next node 4' (in this case, the smartwatch); this uses the communication mechanism 5 enabled between the two nodes 4-4', such as, for example, an HTTP invocation on the pre-existing Bluetooth channel connecting the devices. This completes the participation of said node 4 in the authentication process.
- The second node 4' (i.e. the application in the smartwatch) collects the data 15' from the previous node 4 using a communications module 10' and transfers them by means of an interface 16' to a module 8' for logic control and cryptography of this node;
- The logic module 8' accesses a data storage module 9' through an interface 12' and collects initialisation and cryptographic process status data, for example for an OATH-OCRA authentication;
- The logic module 8' applies the OCRA algorithm and generates a result which is sent via an interface 11' to a presentation module 7', which displays it, in the example of implementation under consideration, on the screen of the smartwatch worn by the user.

The password generation mechanism will only present a valid result (the digits which appear on the smartwatch in this example of implementation) when all the steps in the sequence have been carried out correctly. These digits are the OTP which the user must enter (in this example they will be entered manually) in the front-end of the system which required the authentication.

If the sequence is interrupted, no information will be presented on the smartwatch display 7'. In this way, a possible attack using a mechanism which steals the information from any of the steps just explained is not sufficient to generate a valid OTP. Given that the last node only presents the OTP on the user's local device but does not transmit it, this also makes it difficult for a third party to intercept it.

The service accessed may validate the OTP, and thus the user's identity, provided it has sufficient information to replicate it, for example with prior knowledge of the initialisation and configuration parameters of the nodes, shared secrets, additional cryptographic keys (in the case of asymmetric cryptography algorithms), or other elements which may be inferred (the time, the user's position, etc.). All of this will be carried out depending on the specific implementation; in the example considered, it will be sufficient for the server to know, apart from the SMS which acts as a challenge, the user's secret PIN, the initialisation parameters for the OCRA algorithm and the status of the OCRA process (internal algorithm counters).

The method and the system proposed by this invention have been described above on the basis of cooperation between various devices of the mobile telephone type and other wearable devices carried or worn by the user, which are inter-related by some kind of physical connectivity in the proximity of the user, whenever the device is in active mode. However, this form of embodiment must be understood solely as an illustrative example of the invention's abilities, given that, as experts in the matter will understand, the method and the system can be applied generally to proximity environments in the context of Internet communication and thus are not limited to wearable devices and devices carried by the user. For example, some of the devices may be in the user's car or home and when the ad-hoc network 5 between devices is created by the proximity of the user and the devices he/she is carrying (for example, a mobile telephone), the cooperative system can act correctly to allow access (for example, access to a garage).

In addition, the method and system of this invention may be generalised for use in an ecosystem of applications running on a certain device, such as, for example, the applications a user has downloaded and installed on his/her mobile telephone. Until now, the applications have acted independently, and are fundamentally related to a service at the back-end. In this invention, the nodes will be the applications and the communication mechanism will be some procedure available in the technology of the telephone to invoke other applications, such as an Android Intent or the use of url-scheme in iOS. The cooperation between applications may allow information to be communicated reliably (for example, for new payment methods) without having to pass through the services at the back-end.

## Claims

1. Method of authentication through cooperation between devices in proximity, for specific use with mobile devices, computers or systems allowing access to logical resources (for example, on-line services and systems), physical resources (for example, positions, locations and stays), or validating processes or transactions securely (for example, a transfer of funds), with generation of a one-time password (OTP) through cooperation of a number of devices organised as nodes (4, 4', 4") carried by the user and inter-related via some type of physical connectivity, for example between a mobile telephone and other wearable means carried by a user, such as a smartwatch (2), a programmable bracelet (2'), programmable glasses (2") or another object of a similar nature, **characterised in that** it comprises a sequence of stages between an initial node (4) and an end node (4') which include:
- establishing an initial node (4) and an end node (4') between the devices carried by the user, for authentication purposes, such as, for example, a mobile telephone (1) and a smartwatch (2);
- receiving an SMS message in the initial node (4), as input data (14a), collected through a communications module (10), and supplying said SMS to a logic control and cryptography processing module (8) via an interface (16) for processing, in order to authenticate an operation;
- requesting the user to enter a secret PIN (14b);
- validating the secret PIN entered (14b) using the processing module (8), making use of the configuration data contained in a data storage module;
- if the secret PIN entered by the user is validated as correct, calculating in the processing module (8) a piece of data deriving from the PIN entered and SMS received and transferring said calculated data in the processing module (8), via an interface (17), to the communications module (10) from where it is re-sent as output data (18) to the following node (4'), for example a smartwatch worn by the user, using a communication network (5) established between the two devices;
- receiving in the new node (4') the data received from the initial node (4) through a communications module (10') and transferring the data received through an interface (16') to a logic and processing module (8');
- accessing by means of the logic and processing module (8'), through an interface (12'), a data storage module (9') in this end node (4'), and collecting initialisation and status data of a cryptographic process, and
- applying in the logic and processing module (8') an OCRA algorithm to generate a single valid result which is sent through an interface (11') to a presentation module (7') which is displayed on the screen of the end node (4'), for example the user's smartwatch.

2. Method according to claim 1, **characterised in that** the derived data calculated by the logic and processing module (8) in the initial node (4) from the user PIN entered and the SMS message received, is in particular a HASH function.

3. Method according to claim 1, **characterised in that** the communication mechanism established to send the data between devices or nodes (4, 4') is in particular an HTTP invocation on the Bluetooth channel linking the two devices.

4. Method according to claim 1, **characterised in that** the authentication process is in particular of the OATH-OCRA type.

5. System for the implementation of a method according to one or more of claims 1 to 4, implemented between devices which are inter-related by some type of physical connectivity which may be available by proximity of the user whenever the device is activated, **characterised in that** it comprises a succession of nodes (4, 4', 4") in the form of devices worn or carried by the user, such as a mobile telephone (1) constituting an initial node (4), and a smartwatch (2), a programmable bracelet (2') or programmable glasses (2") constituting end nodes (4'), whose nodes are interlinked by means of an ad-hoc network (5), in which each of said nodes (4, 4', 4") includes:
- a communications module (10; 10');
- a data storage module (9; 9');
- a logic control and cryptography module (8; 8');
- means for receiving data (14a) and means for entering data (14b);
- a series of interfaces (12, 16, 17; 12', 16', 17') for communication between modules of each respective node;
- means (18) for output of data in the initial node (4);
- means (15') for receiving data in the end nodes, and
- a module (7') for presentation of information on the end result to the user.
